# EUROPÄISCHE PATENTANMELDUNG

(11) **EP 0 553 781 A1**
(43) Veröffentlichungstag der Anmeldung: **04.08.1993**
(21) Anmeldenummer: 93101192.8
(22) Anmeldetag: 27.01.1993
(51) Int. Cl.: G01N 21/88, G01N 21/90, G01B 11/00

(54) **Vorrichtung zum optischen Prüfen von Gegenständen**

(30) Priorität: 28.01.1992 DE 4202247
(71) Anmelder: WIDMANN BILDVERARBEITUNGSSYSTEME OHG, D-88267 Vogt (DE)
(72) Erfinder: Widmann, Klaus, W-7981 Vogt (DE); Marschall, Gerhard, W-7967 Bad Waldsee (DE)

(57) **Zusammenfassung**

Es wird eine Vorrichtung zum optischen Prüfen von Gegenständen (1) mit einer Lichtquelle (3) und einem Bilddetektor (2) vorgeschlagen, bei der relative Bewegung zwischen einzelnen Komponenten durch eine bewegliche Abbildungsvorrichtung simuliert werden. Anhand eines Ausführungsbeispiel wird die Simulation einer kreisförmigen Bewegung sowohl einer Kamera (2) als auch einer Lampe (3) oberhalb eines ringförmigen Gegenstandes (1) beschrieben. In der hierzu benötigten Abbildungsvorrichtung finden teilweise bewegliche Prismen (10, 12, 16, 17, 20) und Linsen (9, 19) Verwendung.

## Beschreibung

Die Erfindung betrifft eine Vorrichtung zum optischen Prüfen von Gegenständen nach dem Oberbegriff des Anspruch 1 .

Vorrichtungen, die einen Gegenstand beleuchten und ein Bild des Gegenstandes mit Hilfe einer Kamera oder dgl. zur Qualitätsprüfung aufnehmen sind nach dem Stand der Technik bereits bekannt. Um einen Gegenstand Zu überprüfen, der größer ist als der erfaßte Bildausschnitt, wird die Kamera am Gegenstand vorbei bewegt. Hierbei ist unbedingt zu beachten, daß die Anschlußkabel der Kamera durch die Bewegungen keinen mechanischen Belastungen, wie Zug oder Verdrehung ausgesetzt werden. Insbesondere bei einem rotationsförmigen Bewegungsablauf ist man deshalb dazu übergegangen, die entsprechenden Kontakte über Schleifringe herzustellen. Dabei hat es sich als äußerst schwierig herausgestellt, die Videosignale störungsfrei über solche Schleifringe zu leiten.

Soll sich der Lichteinfallswinkel bezüglich der Kamera im Laufe der Untersuchung nicht ändern, muß notgedrungen die Lichtquelle mit der Kamera bewegt werden. Dies erfordert umständliche Halterungskonstruktionen und ist dementsprechend mit großem, kostenträchtigem Aufwand verbunden. Eine Bewegungsvorrichtung für den Gegenstand kann diese Nachteile nicht beheben, sondern führt lediglich zu einer Verlagerung der Problematik.

Aufgabe der Erfindung ist es, eine Vorrichtung der einleitend bezeichneten Art vorzuschlagen, die ein Abtasten des Gegenstandes bei fest fixiertem Bilddetektor und ebenfalls fest fixierter Lichtquelle erlaubt, ohne dabei jedoch den Gegenstand zu bewegen.

Diese Aufgabe wird ausgehend von einer Prüfvorrichtung der einleitend bezeichneten Art erfindungsgemäß durch die kennzeichnenden Merkmale des Anspruchs 1 gelöst.

Der Grundgedanke der Erfindung besteht darin, die relative Bewegung zwischen dem Bilddetektor und dem Gegenstand bzw. zwischen der Lichtquelle und dem Gegenstand durch wenigstens eine Abbildungsvorrichtung, die eine mindestens teilweise bewegliche Anordnung optischer Elemente umfaßt, zu simulieren.

Somit kann eine Vorrichtung mit den kennzeichnenden Merkmalen des Anspruchs 1 einen Gegenstand abtasten, wobei sowohl der Bilddetektor als auch die Lichtquelle fixiert sind. Die oben angeführten Nachteile bekannter Vorrichtungen entfallen hiermit vollständig. Auch der Gegenstand braucht während des Prüfvorgangs nicht bewegt zu werden, womit ebenfalls ein nicht unerheblicher Aufwand vermieden wird.

Durch die in den Unteransprüchen aufgeführten Maßnahmen werden besonders vorteilhafte Aus- und Weiterbildungen der im Hauptanspruch angegebenen Vorrichtung vorgeschlagen.

Eine erfindungsgemäße Abbildungsvorrichtung kann mit Hilfe von Linsen, in Verbindung mit Prismen und/oder Spiegeln realisiert werden.

Mit einer Prismenanordnung können Bilder, die von verschiedenen Bereichen des Gegenstandes an verschiedenen Orten aufgenommen werden, auf einen feststehenden Bilddetektor abgebildet werden. Die zur Abbildung verwendeten Lichtstrahlen werden dabei über wenigstens ein bewegliches Prisma auf ein feststehendes Prisma und von diesem in eine fest vorgegebene Richtung weitergeleitet. Je nach Art der Bewegung, mit der der Gegenstand abgetastet werden soll, sind mehrere bewegliche Prismen notwendig, um den gewünschten Effekt zu erzielen.

Da wegen der Beweglichkeit der Prismen der Strahlengang innerhalb der Prismenanordnung in seiner Länge variabel sein sollte, sind Vorkehrungen zu treffen, damit die Abbildungseigenschaften der Vorrichtung nicht von der Länge des Strahlengangs im Bereich der Prismenanordnung abhängen. Dieses Problem ist mittels zweier konvexer Linsen zu lösen, die im Strahlengang vor bzw. hinter der Prismenanordnung angebracht werden. Die erste, gegenstandsseitige Linse der Vorrichtung wird so angeordnet, daß sie die vom Gegenstand ausgehenden, zur Abbildung verwendeten Strahlenbündel parallelisiert, was einer Abbildung ins Unendliche gleichkommt. Die zweite Linse auf der Seite des Bilddetektors fokussiert wiederum die parallelisierten Strahlenbündel und bildet damit das virtuelle Bild des Gegenstandes aus dem Unendlichen auf den Bilddetektor ab. Damit sind die Abbildungseigenschaften der Vorrichtung von der Länge des Strahlenganges zwischen den beiden Linsen unabhängig.

Grundsätzlich kann auf diese Weise mit beweglichen Prismen und einer Eingangslinse eine Abbildungsvorrichtung geschaffen werden, die einen Gegenstand nach allen Raumrichtungen hin abtasten kann und bei Bedarf zusätzlich den Blickwinkel der Vorrichtung variabel gestaltet, wobei der Bilddetektor stets fixiert bleibt.

Eine spezielle Vorrichtung, bei der ein ringförmiger Gegenstand in einer Ebene abgetastet wird, wird später anhand eines Ausführungsbeispiels näher erläutert.

Bei Rotationsbewegungen von Teilen einer solchen Abbildungsvorrichtung kann eine unerwünschte Bilddrehung verursacht werden. Dieser Effekt läßt sich durch ein Umkehrprisma, z. B. durch ein Schmidt-Pechanprisma oder ein Dove-Prisma, mit einer entsprechenden Ausgleichsrotationsbewegung kompensieren.

Wird bei einer ungeradzahligen Anzahl von Spiegelungen der Drehsinn der Bilddrehung umgekehrt, so kann diese Änderung des Drehsinns durch einen entsprechend ausgerichteten Drehsinn des Bildumkehrprismas ausgeglichen werden.

Auch die Beleuchtung des Gegenstandes mit einer Lichtquelle kann durch eine derartige Abbildungssvorrichting zweckmäßig ausgebildet werden. So läßt sich beispielsweise eine rotierende Lichtquelle dadurch simulieren, daß ein Parallelprisma, das die Lichtstrahlen parallel versetzt, im Strahlengang einer feststehenden Lichtquelle rotiert. Bei Bedarf kann der Rotationsradius eines solchen rotierenden Lichtstrahls mit Hilfe zweier beweglicher Prismen verändert werden. Der Vollständigkeit halber sei erwähnt, daß der Einfallswinkel eines Lichtstrahls auf dem Gegenstand ebenfalls in der beschriebenen Weise veränderbar ist. Durch zusätzliches Anbringen von Sammel- oder Streulinsen wird die Beleuchtung des Gegenstandes weiter ausgestaltet.

Wesentlich bei der Erfindung ist die Simulation einer Bewegung entweder zwischen Gegenstand und Bilddetektor oder zwischen Gegenstand und Lichtquelle. Dabei liegt es nahe, mit Hilfe zweier simultan und synchron arbeitender Abbildungsvorrichtungen zwei solche Bewegungen zu kombinieren, so daß letztendlich der Eindruck erweckt wird, daß der Gegenstand bei festgehaltenem Bilddetektor und festgehaltener Lichtquelle bewegt wird.

Ein Ausführungsbeispiel der Erfindung ist in der Zeichnung dargestellt und in der nachfolgenden Beschreibung näher erläutert. Es zeigen
- Fig. 1: einen Vertikalschnitt einer erfindungsgemäßen Prüfvorrichtung durch eine Ebene, die durch die horizontale Achse der tatsächlichen Beobachtungsrichtung des Bilddetektors und der darauf senkrecht stehenden simulierten Beobachtungsrichtung aufgespannt wird,
- Fig. 2: einen Vertikalschnitt entlang einer Ebene, die unter 90 ° zur Schnittebene von Figur 1 steht und
- Fig. 3: einen Horizontalschnitt durch eine untere Kammer der Prüfvorrichtung.

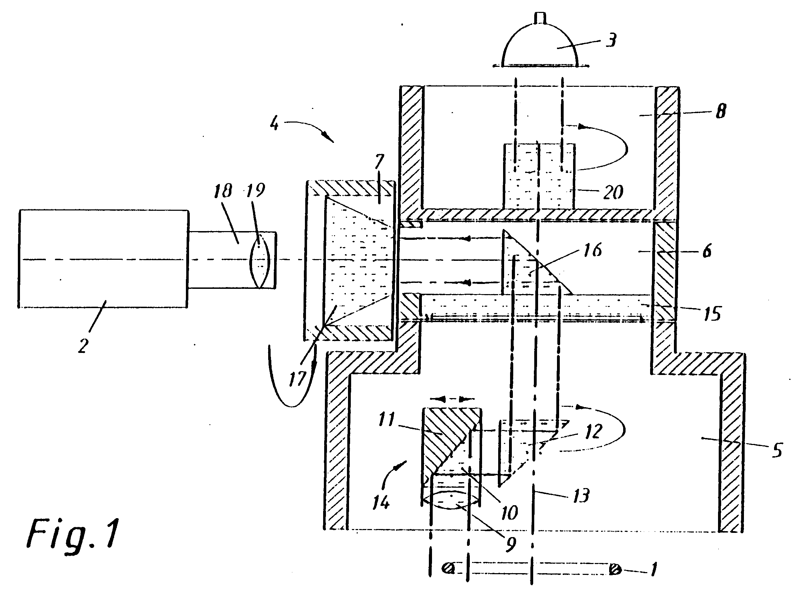

Figur 1 zeigt eine Prüfvorrichtung zum optischen Abtasten eines ringförmigen Gegenstandes 1. Hierzu sind eine Kamera 2 sowie eine Lampe 3 zur Bilderfassung bzw. Beleuchtung vorgesehen. Die Abbildungsvorrichtung 4 ist in insgesamt vier verschiedenen Gehäusen 5 - 8 untergebracht, die teilweise offen oder mit durchsichtigen Glaswänden versehen sind.

In der unteren Kammer 5 befindet sich eine erste Linse 9 sowie ein erstes Prisma 10, das an einer Halterung 11 befestigt ist. Ein zweites Prisma 12 ist in der Mitte von Kammer 5 angeordnet. Die Komponenten 9 - 12 in der unteren Kammer 5 sind um eine Rotationsachse 13 drehbar ausgebildet. Es ist deutlich zu sehen, daß sich die erste Linse 9 sowie das erste Prisma 10 mit seiner Halterung 11 in einem gewissen Abstand zur Rotationsachse 13 befinden, während das zweite Prisma 12 von dieser geschnitten wird. Außerdem ist die von der Linse 9 und dem ersten Prisma 10 mit seiner Halterung 11 gebildete Eingangskomponente 14 in ihrem Rotationsradius verstellbar.

Die untere Kammer 5 ist mit einer mittleren Kammer 6 über eine durchsichtige Glasplatte 15 verbunden. In der mittleren Kammer 6 ist ein drittes Prisma 16 fest fixiert.

Auf der Seite der Kamera 2 der Abbildungsvorrichtung 4 befindet sich die Seitenkammer 7 in der ein Bildumkehrprisma 17 drehbar angeordnet ist. Im Eingangsbereich 18 der Kamera 2 befindet sich schließlich die zweite Linse 19.

Oberhalb der mittleren Kammer 6 ist die obere Kammer 8 drehbar montiert. In ihr befindet sich ein Parallelprisma 20.

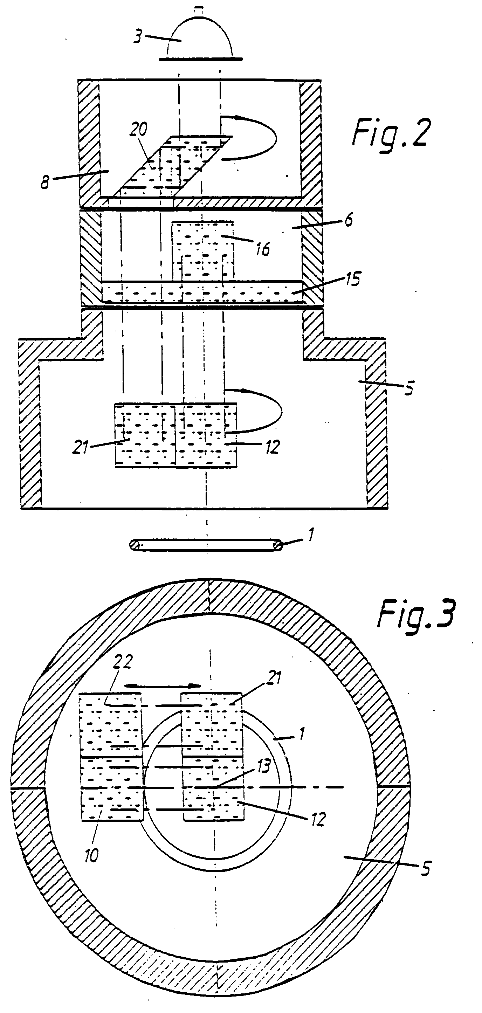

Einige zusätzliche Prismen sind in Figur 1 nicht zu sehen, da sie sich entweder vor der Schnittebene durch die Abbildungsvorrichtung befinden oder aber durch dargestellte Bauteile verdeckt werden. Diese Prismen sind in Figur 2 bzw. Figur 3 zu sehen.

Es handelt sich dabei um die Prismen 21 und 22 in der unteren Kammer 5, die um die gleiche Rotationsachse 13 wie die Prismen 10, 12 und 20 drehbar sind.

Die vom Gegenstand 1 ausgehenden, zur Abbildung verwendeten Strahlenbündel werden von der ersten Linse 9 parallelisiert, was einer Abbildung ins Unendliche gleichkommt. Hierdurch spielt die Länge des folgenden Strahlenganges keine Rolle mehr, was sowohl für die Verstellbarkeit des Rotationsradius der Eingangskomponente 14 als auch für die Verwendbarkeit des Bildumkehrprismas 17 von Bedeutung ist.

Die beiden Prismen 10 und 12 sind so angeordnet und ausgebildet, daß ein entlang der Hauptachse der Linse 9 einfallender Lichtstrahl zweimal um 90° abgelenkt wird, so daß er das zweite Prisma 12 parallel versetzt entlang der Rotationsachse 13 verlaßt.

Das ins Unendliche abgebildete Bild des Gegenstandes wird dadurch ebenfalls parallel versetzt, wobei der abgebildete Bildausschnitt der Stellung der Eingangskomponente über dem Gegenstand 1 entspricht.

Über das dritte Prisma 16 und die zweite Linse 19 wird dieses Bild aus dem Unendlichen in horizontaler Richtung auf die Kamera 2 abgebildet.

Durch eine Drehbewegung der Eingangskomponente 14 und des zweiten Prismas 12 wird dabei eine Drehbewegung der Kamera 2 simuliert. Ohne die Verwendung des Bildumkehrprismas 17 wird von der Kamera 2 also ein Bild aufgenommen, das einer Kreisbewegung der Kamera 2 oberhalb des Gegenstandes 1 anstelle der Eingangskomponente 14 entspricht.

Durch die Verwendung des Bildumkehrprismas 17 wird die Drehbewegung der Eingangskomponente 14 kompensiert, d. h. es wird ein Bild erzeugt, das eine Rotation des Gegenstandes 1 unter einer feststehenden Kamera simuliert. Das Bildumkehrprisma muß hierzu mit der halben Winkelgeschwindigkeit der Drehbewegung der Eingangskomponente 14 und des zweiten Prismas 12 mit einem der Bilddrehung entgegengesetzte Drehsinn gedreht werden. Als Bildumkehrprismen kommen beispielsweise ein Dove-Prisma oder ein Schmidt-Pechanprisma in Frage. Eine Drehung solcher Prismen in einer Abbildungsvorrichtung erzeugt eine Drehung des Bildes mit verdoppelter Geschwindigkeit.

Die Lampe 3 zeigt ein konvergierendes Lichtbündel, das mit Hilfe des Parallelprismas 20 seitlich neben die entlang der Rotationsachse 13 angebrachten Prismen 12 und 16 versetzt wird. Das Parallelprisma 20 rotiert mitsamt der oberen Kammer 8 mit der gleichen Geschwindigkeit wie die Eingangskomponente 14 bzw. Prisma 12, wodurch der einfallende Lichtstrahl ebenfalls rotiert. Mit Hilfe der Prismen 21 und 22, die mit den Prismen 10 bzw. 12 verbunden sind und damit den gleichen Drehbewegungen unterliegen, wird der Lichtstrahl auf den Gegenstand abgelenkt. Auf diese Weise wird für eine gleichbleibende Beleuchtung während der Drehbewegung gesorgt.

Das mit einer solchen Abbildungsvorrichtung 4 mit der Kamera 2 aufgenommene Bild des Gegenstandes 1 erweckt den Eindruck, als würde der Gegenstand 1 unter einer oberhalb von ihm und senkrecht stehenden Kamera gedreht und dabei von einer feststehenden Lampe beleuchtet werden.

Der in diesem Ausführungsbeispiel benutzte Grundgedanke ist nicht auf das Abtasten ebener und ringförmiger Gegenstände beschränkt. Die Prismenanordnung kann nahezu beliebig erweitert werden, wodurch entsprechende Bewegungen der Eingangskomponente 14 realisierbar sind. Wesentlich ist es, die optischen Elemente beweglich zu gestalten, um eine Bewegung zwichen Gegenstand 1 und Kamera 2 bzw. Lampe 3 zu simulieren.

## Patentansprüche

1. Vorrichtung zum optischen Prüfen von Gegenständen mit einer Lampe oder dergleichen als Lichtquelle und einer Kamera oder dgl. als Bilddetektor, dadurch gekennzeichnet, daß wenigstens eine mindestens teilweise bewegliche, eine Anordnung optischer Elemente umfassende Abbildungsvorrichtung (4) zur Simulation wenigstens einer relativen Bewegung zwischen der Lichtquelle (3) und dem Gegenstand (1), bzw. dem Bilddetektor (2) und dem Gegenstand (1) vorhanden ist.

2. Vorrichtung nach Anspruch 1 dadurch gekennzeichnet, daß in einer Abbildungsvorrichtung (4) eine Lichtquelle (3) so auf einen Gegenstand (1) und der Gegenstand (1) so auf einen Bilddetektor (2) abgebildet werden, daß eine Drehung des in Wirklichkeit feststehenden Gegenstandes (1) bei feststehender Lichtquelle (3) und feststehendem Bilddetektor (2) simuliert wird.

3. Vorrichtung nach Anspruch 1 dadurch gekennzeichnet, daß als optische Elemente Linsen, in Verbindung mit Prismen und/oder Spiegeln verwendbar sind.

4. Vorrichtung nach einem der Ansprüche 1 bis 3 dadurch gekennzeichnet, daß die zur Abbildung verwendeten Lichtstrahlen über wenigstens ein bewegliches Prisma (10, 12) auf ein feststehendes Prisma (16) und von diesem in eine vorgegebene Richtung weitergeleitet werden.

5. Vorrichtung nach einem der Ansprüche 1 bis 4, dadurch gekennzeichnet, daß als Eingangs- und Ausgangselement der Abbildungsvorrichtung (4) jeweils eine konvexe Linse (9,19) Verwendung findet, wobei diese Linsen so angeordnet sind, daß die erste Linse (9) durch Parallelisieren der zur Abbildung verwendeten Strahlenbündel eine Abbildung ins Unendliche und die zweite Linse (19) durch Fokussierung der parallelisierten Strahlenbündel eine Abbildung aus dem Unendlichen durchführt.

6. Vorrichtung nach einem der Ansprüche 1 bis 5, dadurch gekennzeichnet, daß in einer Abbildungsvorrichtung (4) die erste Linse (9) fest mit einem ersten Prisma (10) zu einer Eingangseinheit (14) verbunden ist, die um eine außerhalb dieser Eingangseinheit (14) liegende senkrechte Achse (13) mit verstellbarem Radius rotierbar so angeordnet und ausgebildet ist, daß ein entlang der Hauptachse der ersten Linse vertikal einfallender Lichtstrahl um 90° in eine horizontale Ebene abgelenkt wird und in jeder Stellung der Eingangseinheit (14) während der Rotation senkrecht auf die Rotationsachse (13) trifft, daß ein zweites, mit der gleichen Winkelgeschwindigkeit um die gleiche Achse (13) rotierendes Prisma (12) so angeordnet und ausgebildet ist, daß es von der Rotationsachse (13) geschnitten wird und einen senkrecht auf die Rotationsachse (13) einfallenden, ursprünglich entlang der Hauptachse der ersten Linse (9) verlaufenden Lichtstrahl um 90° ablenkt und entlang der Rotationsachse (13) weiterleitet und daß ein drittes, fixiertes Prisma (16) vorhanden ist, das einen solchen Lichtstrahl um 90° in eine feststehende horizontale Richtung, in der ein Bilddetektor (2) vorgesehen ist, ablenkt.

7. Vorrichtung nach einem der Ansprüche 1 bis 6 dadurch gekennzeichnet, daß in einer Abbildungsvorrichtung (4) innerhalb des parallelisierten Strahlenganges wenigstens ein Bildumkehrprisma (17) verwendet wird, das um eine Achse, die durch einen ursprünglich entlang der Hauptachse der ersten Linse (9) einfallenden Lichtstrahl am jeweiligen Ort innerhalb der Abbildungsvorrichtung gegeben ist, so drehbar ist, daß eine Drehung des Bildes auf dem Bilddetektor (2) hinter der zweiten Linse (19), die durch die Rotation der Eingangseinheit (14) und des zweiten Prismas (12) verursacht wird und eine durch eine ungerade Anzahl von Spiegelungen verursachte Umkehr des Drehsinns kompensiert wird.

8. Vorrichtung nach Anspruch 7 dadurch gekennzeichnet,daß als Bildumkehrprisma (17) im Strahlengang vor der zweiten Linse (19) ein Schmidt-Pechan- oder ein Dove-Prisma drehbar angeordnet ist.

9. Vorrichtung nach einem der Ansprüche 1 bis 8 dadurch gekennzeichnet, daß ein drehbares Parallelprisma (20) vorhanden ist, auf Grund dessen ein Lichtstrahl parallel versetzt und einer Drehung unterworfen werden kann.

10. Anspruch nach einem der Ansprüche 1 bis 9 dadurch gekennzeichnet, daß der Rotationsradius eines um eine vertikale Achse und zu dieser parallel verlaufenden Lichtstrahls durch rotierende Prismen (21, 22) verstellbar ist und daß der Einfallswinkel des Lichtstrahls auf einen Gegenstand (1) mit wenigstens einem Prisma (22) verstellbar ist.
